# DEMANDE DE BREVET EUROPEEN

(11) **EP 4 549 253 A1**
(43) Date de publication de la demande: **07.05.2025**
(21) Numéro de dépôt: 24210080.8
(22) Date de dépôt: 31.10.2024
(51) Int. Cl.: B60R 13/02, B60H 1/22, B29C 45/14, B29C 70/88

(54) **PIÈCE DE GARNITURE OU D'ÉQUIPEMENT POUR VÉHICULE, INTÉGRANT UN ÉLÉMENT FONCTIONNEL, ET PROCÉDÉ ET MOULE POUR SA FABRICATION**

(30) Priorité: 03.11.2023 DE 102023130477
(71) Demandeur: SMRC Automotive Holdings Netherlands B.V., 1101 BA Amsterdam (NL); Motherson Innovations Company Ltd., London EC2N 2AX (GB)
(72) Inventeur: SAELEN, Marc, 59251 ALLENNES-LES-MARAIS (FR); BUCHET, Yann, 67000 STRASBOURG (FR)
(74) Mandataire: Cabinet Nuss

(57) **Abrégé**

L'invention concerne une pièce (1) de garniture ou d'équipement pour véhicule comprenant au moins une couche (2) en matériau plastique avec des formations ou structures saillantes (4) au niveau de sa face arrière (3') et au moins un élément fonctionnel surfacique (5) de faible épaisseur et comprenant un arrangement (6) de fil(s) ou d'élément(s) allongé(s) ou linéaire(s) analogues, conducteur(s) ou résistif(s), solidaire d'une structure support (7) poreuse ou pourvue d'interstices.

Pièce (1) caractérisée en ce qu'au moins l'arrangement (6) de fil(s) de chaque élément fonctionnel surfacique (5), et préférentiellement également la structure support (7) à extension surfacique respectivement associée sous forme de couche poreuse ou pourvue d'interstices, est (sont) au moins partiellement intégré(s) dans et encapsulé(s) par le matériau plastique (MP) formant cette couche (2), ce au niveau de la face arrière (3') de cette couche (2), et en ce qu'au moins une formation ou structure saillante (4) est reliée matériellement avec ladite couche (2) au niveau dudit au moins un élément fonctionnel surfacique (5).

## Description

[La présente invention concerne le domaine des pièces à extension surfacique intégrant des éléments fonctionnels électriques, ces derniers étant également à extension surfacique et formés généralement d'une ou de plusieurs lignes électriques (mono-fil ou multifils) disposées selon des motifs ou configurées en arrangements de manière à couvrir une surface donnée au niveau de la pièce, ainsi que la fabrication de telles pièces, notamment en tant que pièces d'équipement et/ou de garniture intérieures ou extérieures de véhicules.

Dans ce contexte l'invention a pour objets une pièce de garniture ou d'habillage, ou plus généralement d'équipement, intérieure ou extérieure, intégrant un tel élément fonctionnel, ainsi qu'un procédé et un moule pour sa fabrication.

Les pièces de garniture, d'habillage ou d'équipement visées comprennent, de manière non limitative, par exemples les tableaux de bord, les panneaux de porte, les panneaux de console centrale, les montants de fenêtres, les panneaux intérieurs de toiture et pièces d'ébénisterie analogues, les rétroviseurs intérieurs et/ou extérieurs, les éléments de carrosserie en plastique, les calandres, les parechocs, etc...

Les éléments fonctionnels visés sont du type activable ou produisent l'effet recherché par passage d'un courant électrique ou lorsqu'ils sont exposés à des ondes électromagnétiques, le ou les élément(s) linéaire(s) le composant réagissant au passage d'un courant, en présentant des propriétés conductrices ou résistantes. Pour pouvoir être intégrés dans des pièces surfaciques d'épaisseur limitée, ces éléments fonctionnels sont généralement minces, sous forme de structures filaires planes et à extension surfacique (c'est-à-dire que l'élément filaire est arrangé de manière à couvrir une surface fonctionnelle de manière discontinue, à la manière d'une spirale ou d'un serpentin plat par exemples). De plus, ils doivent être positionnés, avec maintien en place du ou des élément(s) linéaire(s), à proximité de la surface apparente de la pièce pour pouvoir remplir leur fonction de manière satisfaisante, donc généralement sous ou dans la couche de substrat ou le corps de la pièce fournissant directement ou supportant ladite surface apparente et généralement venu(e) de moulage de matériau thermoplastique.

Les fonctions visées, incluant par exemple le chauffage, l'éclairage, la détection et la réalisation de mesures dans l'habitacle, la réception, l'émission et/ou la transmission de signaux, la commande, etc..., fournissent des services utiles et améliorent le confort des utilisateurs, conducteurs et/ou passagers. Ils nécessitent généralement une connexion à une source d'énergie ou un dispositif électronique pour leur activation ou fonctionnement.

L'invention s'adresse plus particulièrement aux pièces structurelles de garnissage, pouvant être planes, non planes (ou 3D) ou partiellement planes et non planes, présentant une faible épaisseur par rapport à leur extension surfacique et venues de moulage ou comportant une couche de substrat venue de moulage. Elles consistent principalement en des pièces autoportantes, de préférence sensiblement au moins localement rigides, présentant une forme plane ou non plane, par exemple 3D (tridimensionnelle).

De nombreuses réalisations de telles pièces sont déjà connues (voir par exemple FR-A-3132255), en particulier avec la prévision d'un élément fonctionnel préfabriquée et associé avec une couche support ou substrat de la pièce, et aussi un surmoulage dudit élément fonctionnel rapporté sur une couche pour former un substrat intégrant d'un seul tenant des éléments de fixation et/ou d'appui de la pièce (formations du type pattes ou ergots ou sites d'ancrage ou d'engagement proéminents) ou encore des éléments de rigidification ou de renfort structurel (par exemples nervures ou ailes).

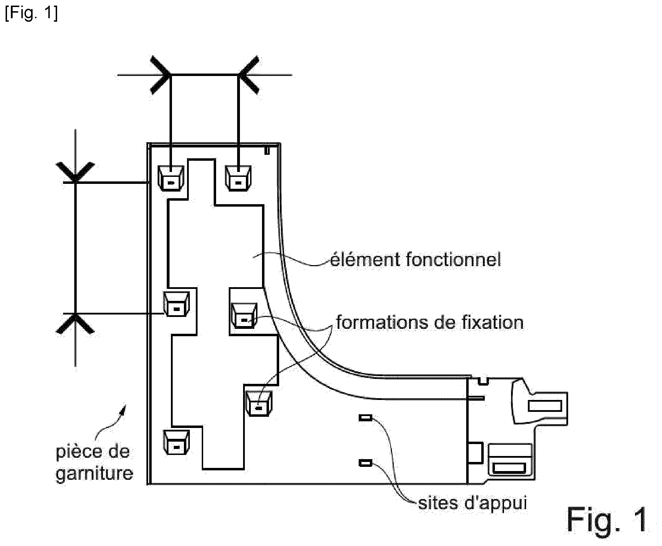

Toutefois, lorsque ces éléments de fixation, appui ou rigidification sont formés directement sur la face arrière du corps ou de la couche devant recevoir l'élément fonctionnel surfacique, ce dernier interfère nécessairement localement avec eux (voir [Fig. 1] : vue de la face arrière d'une pièce de garniture selon l'état de la technique).

Cette interférence est d'autant plus problématique que l'élément fonctionnel surfacique, d'un côté, et lesdits éléments de fixation, d'appui ou de rigidification, de l'autre côté, doivent répondre à des contraintes ou des demandes propres à chacun et qui peuvent s'avérer mutuellement interférentes.

Ainsi, l'élément fonctionnel surfacique devrait présenter une extension surfacique la plus grande possible, en particulier pour des fonctions de chauffage, d'émission/réception (fonction antenne), de détection ou d'éclairage, et pouvoir être facilement réalisable (actuellement par exemple, pour des éléments fonctionnels préfabriqués, sous forme d'un arrangement filaire monté sur une couche support ou prise en sandwich entre deux couches support) et pouvoir être fixée aisément sur la face arrière concernée. En particulier, l'obligation d'une multiplicité de formes de l'élément fonctionnel surfacique préfabriqué pour s'adapter à des implantations, des formes et des tailles variées des éléments de fixation, d'appui ou de rigidification, augmente leurs coûts de production (absence de standardisation, multiples outillages, séries limitées en ligne de fabrication, modification avec interruption en production). A cela s'ajoute la demande, voire la nécessité, de disposer d'au moins une possibilité de raccordement électrique aisé de l'arrangement filaire connecté, tout en garantissant une bonne intégration de l'élément fonctionnel surfacique dans le corps ou la couche devant le recevoir, et le souhait de pouvoir contrôler le bon positionnement de l'élément fonctionnel surfacique dans ce corps ou cette couche, avantageusement en fin de fabrication.

Et, concernant les éléments de fixation, d'appui ou de rigidification, leur nombre et leurs localisations sont souvent imposés par des considérations de solidité du montage in situ de la pièce de garniture, de préservation d'un interstice minimal entre cette dernière et des pièces voisines (si trop espacées : risque esthétique au niveau de l'aspect visuel) et de localisation des sites d'ancrage, de contre-appui ou des formations de fixation complémentaires au niveau de l'environnement de montage in situ dans le véhicule.

En outre, la flexibilité sur la ligne de fabrication des pièces est limitée et les changements de type de pièces à fabriquer (avec des configurations d'implantation des éléments de fixation, appui ou rigidification et des formes d'élément fonctionnel surfacique différentes) sont fastidieux et impactent fortement la productivité.

La présente invention a pour but de pallier ces inconvénients, et de proposer notamment une conception de pièce du type précitée permettant de surmonter les problèmes d'interférence liés à l'intégration d'un élément fonctionnel surfacique, ce sans impacter notablement le procédé de fabrication et en répondant si possible à la demande et/ou au souhait précités.

A cet effet, elle a pour objet une pièce de garniture ou d'équipement pour véhicule, ayant préférentiellement au moins partiellement une forme tridimensionnelle, comprenant au moins une couche en matériau plastique, formant le cas échéant substrat, et présentant une face avant ou apparente et une face opposée arrière, ladite pièce comportant également, d'une part, des formations ou structures saillantes au niveau de sa face arrière, correspondant avec celle de la couche, et, d'autre part, au moins un élément fonctionnel surfacique de faible épaisseur et comprenant un arrangement de fil(s) ou d'élément(s) allongé(s) ou linéaire(s) analogues, conducteur(s) ou résistif(s), solidaire d'une structure support poreuse ou pourvue d'interstices et à extension surfacique, cette pièce étant caractérisée en ce qu'au moins l'arrangement de fil(s) ou analogues du ou de chaque élément fonctionnel surfacique, et préférentiellement également la structure support à extension surfacique respectivement associée sous forme de couche poreuse ou pourvue d'interstices, est (sont) au moins partiellement intégré(s) dans et encapsulé(s) par le matériau plastique formant cette couche, ce au niveau de la face arrière de cette couche, et en ce qu'au moins une formation ou structure saillante est reliée matériellement avec ladite couche au niveau dudit au moins un élément fonctionnel surfacique et à travers ce dernier, cet élément fonctionnel surfacique, ou au moins soit l'arrangement de fils, soit la structure support, étant avantageusement perceptible au niveau de la face arrière, sur une partie ou toute son extension, visuellement ou par palpage.

L'invention sera mieux comprise, grâce à la description ci-après, qui se rapporte à des modes de réalisation préférés, donnés à titre d'exemples non limitatifs, et expliqué avec référence aux dessins schématiques annexés, dans lesquels :

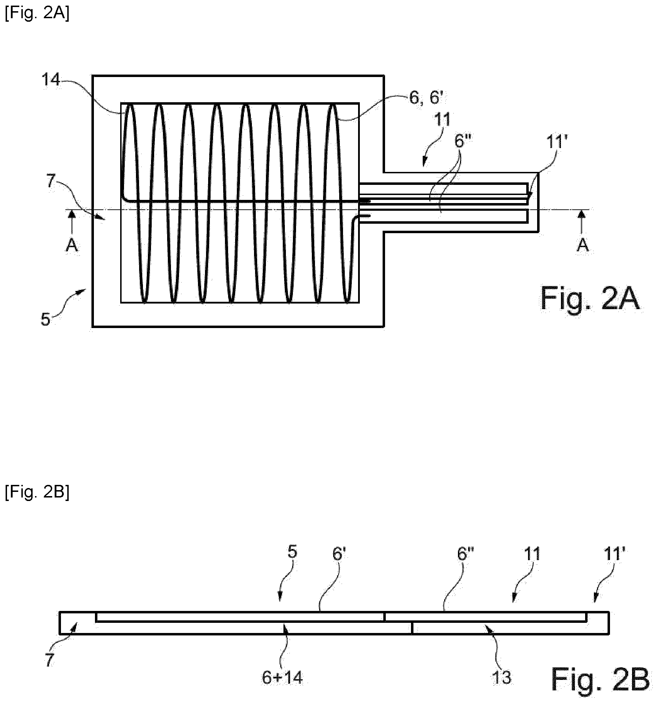

[Fig. 2A] et [Fig. 2B] sont des vues schématiques respectivement de dessus et en coupe selon A-A (de la figure 2A) d'un élément fonctionnel surfacique fin préfabriqué, destiné à être intégré dans une pièce de garniture selon l'invention ;
[Fig. 3] est une vue en élévation et en coupe selon le plan d'une formation saillante de la face arrière d'une pièce de garniture selon l'invention intégrant l'élément fonctionnel représenté figures 2 ;
[Fig. 4A] est une vue partielle à une échelle différente du détail B de la figure 3 ;
[Fig. 4B] est une vue en élévation d'une partie de la face arrière d'une pièce de garniture telle que représentée figures 2 à 4, mais intégrant un élément fonctionnel différent ;
[Fig. 5A], [Fig. 5B], [Fig. 5C] et [Fig. 5D] sont des vues schématiques en coupe d'un moule selon l'invention pour la mise en oeuvre du procédé de fabrication en accord avec l'invention, illustrant quatre étapes consécutives dudit procédé (étapes représentées : ouverture du moule ; mise en place de l'élément fonctionnel sur le poinçon ; fermeture du moule ; injection sous pression du matériau plastique chaud fluide et attente du durcissement) ;
[Fig. 6A] et [Fig. 6B] sont des vues partielles à une échelle différente respectivement du détail C de la figure 5B et du détail D de la figures 5D ;
[Fig. 7A], [Fig. 7B] et [Fig. 7C] sont des vues schématiques en coupe d'un moule selon une variante de réalisation de l'invention pour la mise en oeuvre du procédé de fabrication en accord avec l'invention, illustrant trois étapes consécutives dudit procédé (étapes représentées : ouverture du moule et de la cavité dans le poinçon; mise en place de l'élément fonctionnel sur le poinçon et insertion de l'extrémité de sa partie de connexion dans la cavité ; fermeture du moule et de la cavité et injection sous pression du matériau plastique chaud fluide)
[Fig. 8A], [Fig. 8B] et [Fig. 8C] sont des vues partielles est une vue à une échelle différente du détail C de la figure 3, illustrant trois variantes de réalisation de l'invention.

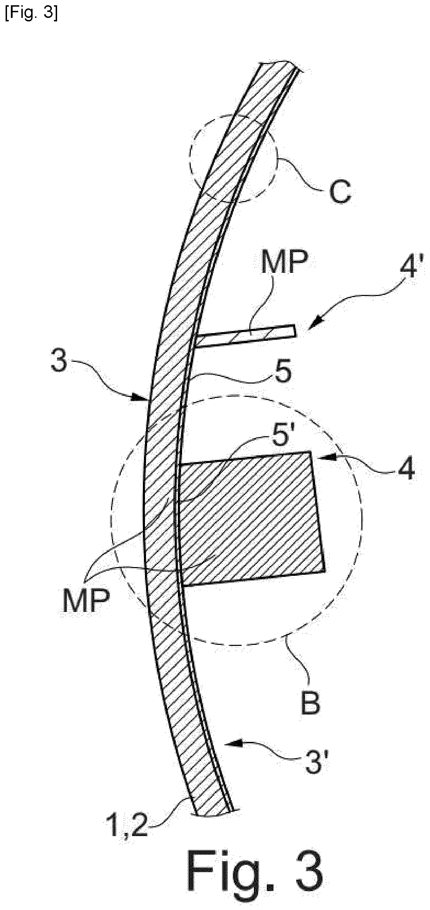

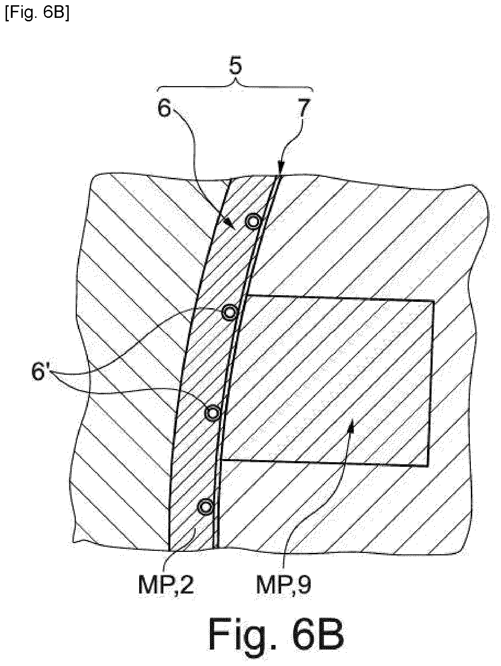

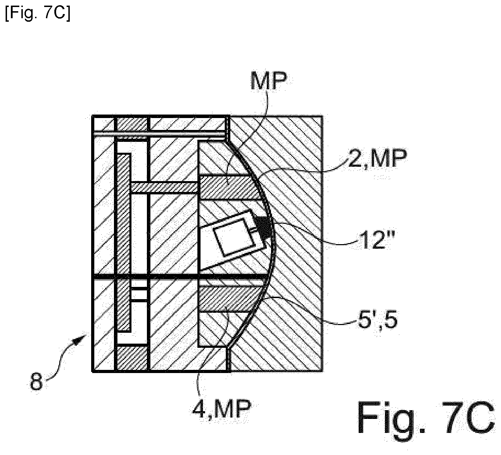

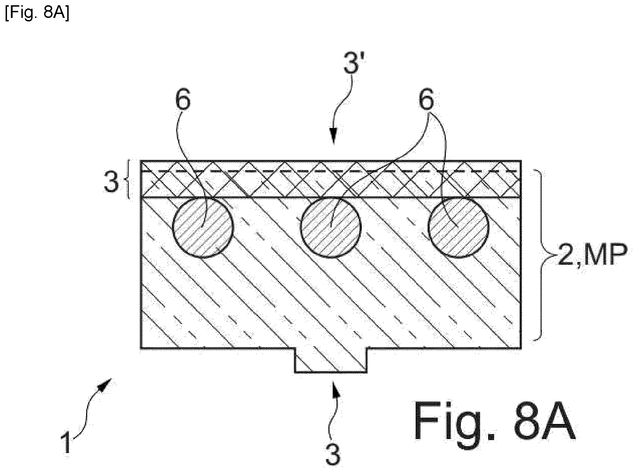

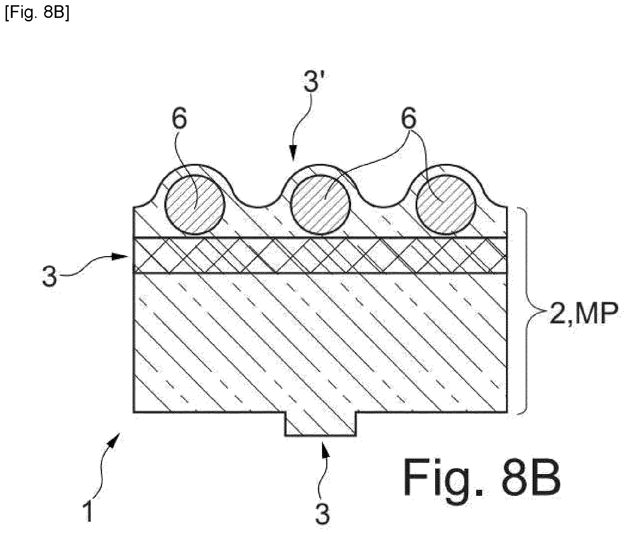

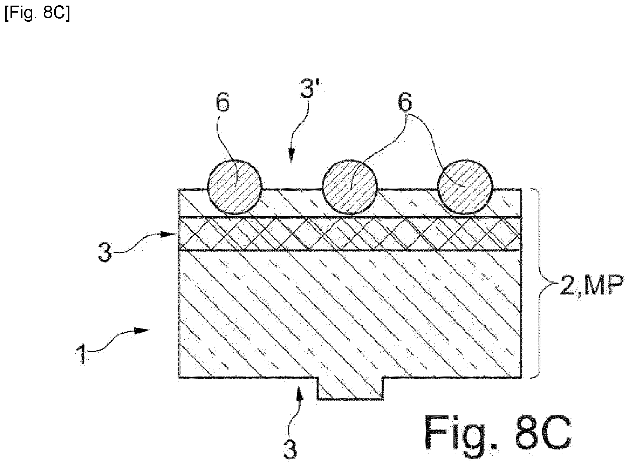

Les figures 3, 4, 6B et 7C (et pour partie les figures 8) montrent une pièce (1) de garniture ou d'équipement pour véhicule, ayant préférentiellement au moins partiellement une forme tridimensionnelle. Cette pièce (1) comprend au moins une couche (2) en matériau plastique (MP), formant le cas échéant substrat, et présentant une face avant ou apparente (3) et une face opposée arrière (3'). Cette pièce (1) comporte également, d'une part, des formations ou structures saillantes (4, 4') au niveau de sa face arrière (3'), correspondant avec celle de la couche (2), et, d'autre part, au moins un élément fonctionnel surfacique (5) de faible épaisseur et comprenant un arrangement (6) de fil(s) ou d'élément(s) allongé(s) ou linéaires (s) analogues (6'), conducteur(s) ou résistif(s), solidaire d'une structure support (7) poreuse ou pourvue d'interstices et à extension surfacique.

L'arrangement (6) surfacique et plan de fil(s) (6') du ou de chaque élément fonctionnel (5) 2D flexible peut correspondre soit à une seule unité fonctionnelle occupant la totalité de la surface de l'arrangement et intégrant toutes les composantes de ce dernier, soit à au moins deux unités fonctionnelles qui sont géographiquement et matériellement distinctes (chacune correspondant à une partie de l'arrangement), ces deux unités fournissant les mêmes fonctions ou non. Parmi les fonctions envisageables, on peut notamment citer : le chauffage, l'éclairage, la détection, la commande (avec ou sans contact), la transmission de signaux (antennes d'émission et/ou de réception), le transfert d'énergie (induction électromagnétique), l'authentification ou d'autres fonctionnalités utiles au conducteur ou aux passagers et activables électriquement.

L'arrangement (6) de fil(s) ou d'éléments linéaires analogues (6') est par exemple solidarisé par collage avec la structure support (7), qui est avantageusement de nature flexible et multi-ajourée (textile, non-tissé, grille) et résistante aux températures et pressions d'injection, et ledit arrangement définit sur cette dernière une zone fonctionnelle (14). Ledit ou lesdits élément(s) allongé(s) ou linéaire(s) (6') peu(ven)t, en variante, aussi être par exemple solidarisé(s) avec la structure support (7) par fusion ou soudure lors de leur dépôt sur cette dernière, ou également y être déposé(s) et solidarisé(s) par impression (par exemple d'encre conductrice/résistive). Selon le cas et éventuellement en fonction de propriétés ou d'avantages recherchés, l'arrangement (6) de fil(s) ou d'éléments linéaires analogues (6') peut être fixée soit sur la face de la structure support (7) dirigée vers la face avant (3), soit sur sa face opposée, dirigée vers la face arrière (3').

Les formations ou structures saillantes (4, 4') peuvent correspondre par exemples à des éléments de fixation et/ou d'appui de la pièce (formations du type pattes ou ergots ou sites d'ancrage ou d'engagement proéminents) ou encore des éléments de rigidification ou de renfort structurel (par exemples nervures ou ailes).

Conformément à l'invention, au moins l'arrangement (6) de fil(s) ou analogues (6') du ou de chaque élément fonctionnel surfacique (5), et préférentiellement également la structure support (7) à extension surfacique respectivement associée sous forme de couche poreuse ou pourvue d'interstices, est (sont) au moins partiellement intégré(s) dans et encapsulé(s) par le matériau plastique (MP) formant cette couche (2), ce au niveau de la face arrière (3') de cette couche (2), et au moins une formation ou structure saillante (4, 4') est reliée matériellement avec ladite couche (2) au niveau dudit au moins un élément fonctionnel surfacique (5) et à travers ce dernier (continuité de matière plastique MP), cet élément fonctionnel surfacique (5), ou au moins soit l'arrangement (6) de fils (6'), soit la structure support (7), étant avantageusement perceptible au niveau de la face arrière (3'), sur une partie ou toute son extension, visuellement ou par palpage (en dehors des zones de la face arrière comportant la ou les formations ou structures saillantes 4, 4').

Grâce à ces dispositions, l'invention permet d'accommoder au niveau de la face arrière (3') de la couche (2) formant le corps de la pièce (1) à la fois des formations ou structures saillantes (4, 4') et un ou des élément(s) fonctionnel(s) surfacique(s) (5), ce sans interférence entre les premier(s) et second(s). Il est par conséquent possible d'implanter les deux types d'éléments sans contraintes en termes d'emplacement ou d'extension. En outre, la cohésion et résistance mécanique du corps de la pièce (1) ne sont pas affectées et le procédé de fabrication pas notablement modifié (par rapport à une pièce 1 sans élément fonctionnel surfacique).

Bien entendu, la superposition ou le chevauchement entre la ou les formations ou structures saillantes (4, 4') et le ou les élément(s) fonctionnel(s) surfacique(s) (5) n'est généralement que partielle et le cas échéant l'intégration et l'encapsulation précitées dudit ou desdits élément(s) fonctionnel(s) surfacique(s) (5) peuvent alors n'être que partielles, à savoir uniquement au droit de la ou des formations ou structures saillantes (4, 4').

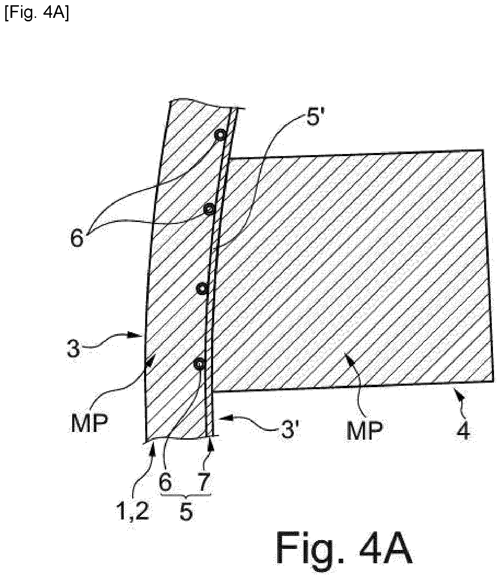

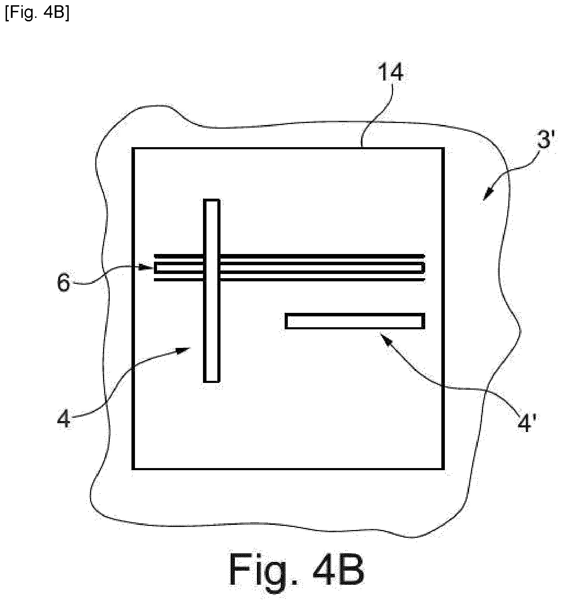

En dehors de ces zones de chevauchement, et selon une première variante ressortant des figures 4A et 8A, l'intégration et l'encapsulation peuvent n'affecter qu'une face dudit ou desdits élément(s) fonctionnel(s) surfacique(s) (5), autrement dit une partie seulement de l'épaisseur de la structure support (7), celle portant le(s) fil(s) ou analogues (6'), l'autre face demeurant apparente en surface sur la face arrière (3'), tout en étant liée à la couche (2). En variante, et comme le montre la figure 8C, l'intégration et l'encapsulation peuvent affecter la structure support (7) en totalité, mais n'affecter les fils (6') que partiellement, une partie de l'arrangement (6) concerné étant alors apparente et même protubérante au niveau de la face arrière (3'). En accord avec un premier aspect de l'invention, et comme le montre la figure 8B par exemple, le ou chaque élément fonctionnel surfacique (5) peut être entièrement intégré dans le matériau plastique (MP) formant cette couche (2), à proximité et sous la face arrière (3'), et ladite au moins une formation ou structure saillante (4, 4'), s'étendant depuis ladite face arrière (3'), est constituée d'un seul tenant avec ladite couche (2) par continuité de matière à travers ledit au moins un élément fonctionnel surfacique (5) pourvues de pores, d'interstices ou de passages similaires répartis sur sa surface.

Ces dispositions permettent non seulement d'assurer une isolation électrique des fils (6'), le cas échéant additionnelle ou complémentaire, de l'arrangement (6), par enrobage et insertion dans le matériau thermoplastique isolant formant la couche (2) et les formations (4, 4') -par exemple polypropylène, polycarbonate, PMMA ou polyester-, mais également d'aboutir à un renforcement de la structure de cette couche, par intégration d'une armature (5).

En outre, on aboutit à une bonne cohésion de l'élément fonctionnel (5) dans la couche (2), à un risque moindre d'arrachement et/ou de dégradation par frottement ou arrachement et à une solidité et à une résistance en fixation des formations ou structures saillantes (4, 4'), du fait de l'absence de rupture de flux de matériau plastique et de ligne de re-soudure (absence d'interface et risque de casse moins élevé de ces formations).

Dans la présente les termes « conducteur « et « isolant » concernent les propriétés électriques des matériaux visés et le terme « renforcement » vise le renforcement structurel ou mécanique, ou encore le renforcement de la rigidité.

Selon une caractéristique de l'invention, et lorsque l'élément fonctionnel surfacique (5) est totalement intégré dans la couche (2) à proximité de la face arrière (3') de celle-ci, l'épaisseur de matière plastique (MP) recouvrant l'élément fonctionnel surfacique (5) et formant la surface de la face arrière (3') est telle que la présence des fils (6') de l'arrangement ou de la structure support surfacique (7) puisse être détecter visuellement ou par palpage ou au toucher (figure 8A, à titre d'exemple.

Autrement dit, l'épaisseur de la couche de recouvrent de matière plastique est suffisamment mince pour que les fils (6') ou la structure support (7) soit perceptible au niveau de la face arrière (3'). Toutefois, elle est avantageusement aussi suffisamment épaisse pour remplir le cas échéant une fonction supplémentaire d'isolation, d'étanchéité ou analogue.

Selon un autre aspect de l'invention, ressortant notamment des figures 8A et 8C, le ou chaque élément fonctionnel surfacique (5) peut être seulement partiellement intégré en profondeur dans le matériau plastique (MP) formant cette couche (2), une partie de l'épaisseur des fils (6') de l'arrangement (6) ou une partie de l'épaisseur de la structure support (7) n'étant pas recouverte ou enrobée par ledit matériau plastique (MP) et étant apparente au niveau de la face arrière (3'), le cas échéant au moins sur une partie de l'extension surfacique dudit arrangement ou de ladite structure support au niveau de ladite face arrière (3').

La variante de la figure 8A assure une bonne isolation et étanchéification des fils (6') situés entièrement dans la couche (2) et la structure support (7) est clairement apparente sur la face arrière (3'), une partie en surface de cette structure étant située en dehors de la matière plastique (MP), dont la limite est indiquée par un trait pointillé. Le cas échéant cette limite peut être confondu avec la surface de la structure support côté arrière (matière plastique affleurante au niveau de la face arrière).

La variante de la figure 8C autorise un raccordement électrique facilité de l'arrangement (6) concerné. Il en est bien sûr de même lorsque les fils (6') ne sont pas du tout enchâssés dans la matière plastique (MP).

Selon une autre caractéristique de l'invention, il peut être prévu que les fils (6') de l'arrangement (6) ou la structure support (7) présente une couleur différente de celle de la matière plastique (MP), notamment par exemple une couleur blanche, pour être plus aisément discernable visuellement (lorsque apparent en surface ou recouvert seulement d'une mince couche de matière plastique).

Dans tous les cas évoqués ci-dessus, la faculté de pouvoir percevoir l'élément fonctionnel (5), ou l'une de ses deux composantes constitutives (6, 6' ; 7) au niveau de la face arrière (3') de la couche (2) permet de s'assurer que cet élément est bien en place dans la pièce (1) après fabrication et qu'il n'a pas été endommagé durant la phase de moulage par injection de matière plastique (MP).

La première variante d'intégration partielle d'un élément fonctionnel (5) dans la couche (2) de matériau plastique (MP), illustrée figure 8A, favorise l'isolation électrique des fils (6'), alors que la seconde variante, illustrée figure 8C, peut favoriser la résistance et la rigidité de la couche (2), ce en fonction aussi de la nature de la structure support (7), ce tout en autorisant une connexion électrique aisée (cela est également le cas pour la figure 8B, les fils pouvant être facilement repérés). En accord avec une autre variante encore, non représentée mais pouvant être aisément déduite des la figure 8C, il peut être prévu que la couche support (7) soit totalement intégrée dans le matériau de la couche (2), tout en étant encore au moins perceptible de l'extérieur, et que les fils (6') ne soient pas en contact ou au moins sensiblement pas entourés de matière plastique (MP).

Afin de pouvoir assurer un branchement aisé au réseau électrique du véhicule, et en accord avec un mode de réalisation particulier de l'invention illustré sur la figure 11, ledit au moins un élément fonctionnel surfacique (5) peut comporter une partie (11) de connexion ou de raccordement en vue de son alimentation électrique et/ou de la transmission de signaux électriques, ce sous la forme d'une extension allongée de l'élément (5) concerné seulement partiellement, voire non intégrée dans la couche (2) et s'étendant librement depuis la face arrière (3') de cette dernière.

Selon un premier mode de réalisation de l'invention, il peut être prévu que la face avant ou apparente (3) de la couche (2) constitue également la face apparente de ladite pièce (1), cette dernière consistant en une pièce monobloc et venue finie de moulage, avec au moins une formation ou structure saillante (4, 4') et au moins un élément fonctionnel surfacique (5) intégré. Du fait d'une finition intégrée lors du moulage, le procédé de fabrication est plus simple et la pièce obtenue moins coûteuse.

Selon un second mode de réalisation de l'invention, il peut être prévu que la face avant (3) de la couche (2) est recouverte, partiellement ou totalement, d'au moins une couche additionnelle, à savoir au moins une couche d'aspect ou un revêtement décoratif, qui constitue la face apparente de ladite pièce (1), ladite couche (2) consistant en une pièce venue finie de moulage, avec au moins une formation ou structure saillante (4, 4') d'un seul tenant et au moins un élément fonctionnel surfacique (5) intégré. Ce mode de réalisation autorise une plus grande liberté dans le choix de la finition et de l'aspect de la pièce, ainsi que son toucher et son confort.

Cette couche additionnelle, rapportée sur la face apparente de la couche (2) formant le corps de la pièce (1), peut par exemple consister en un textile, une peau, un film, une couche de peinture ou de vernis (ou des deux), ou une autre couche de finition, par exemple surmoulée dans une seconde phase de moulage.

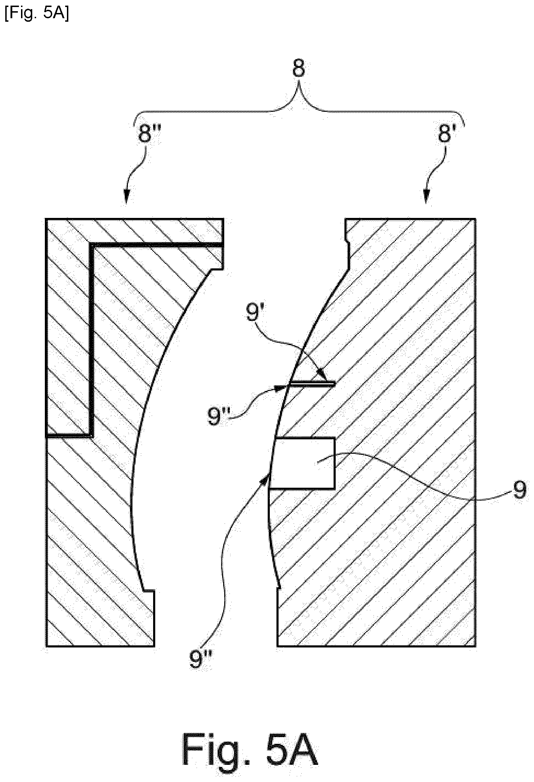

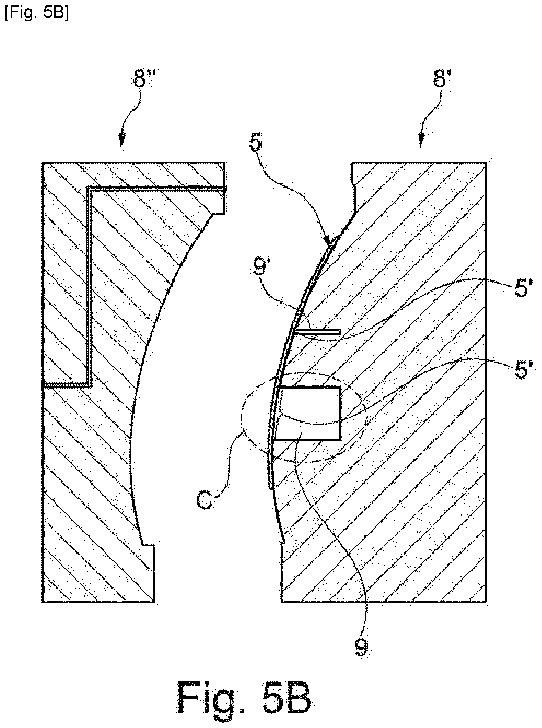

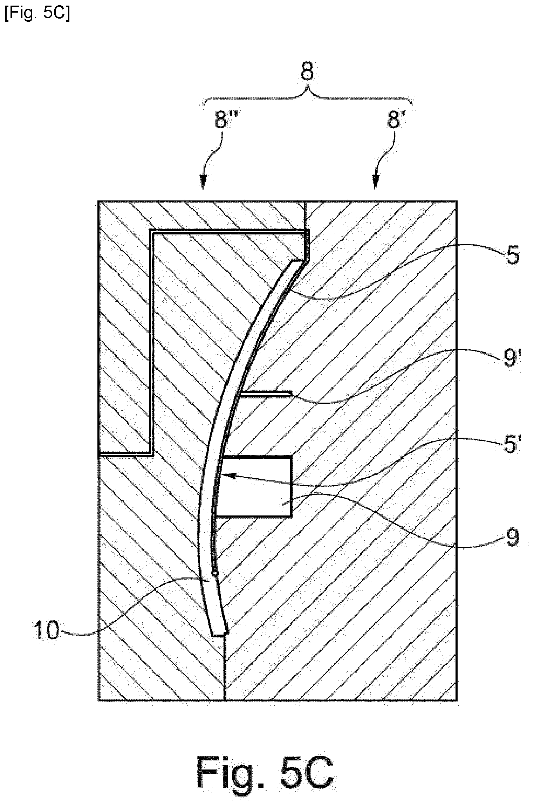

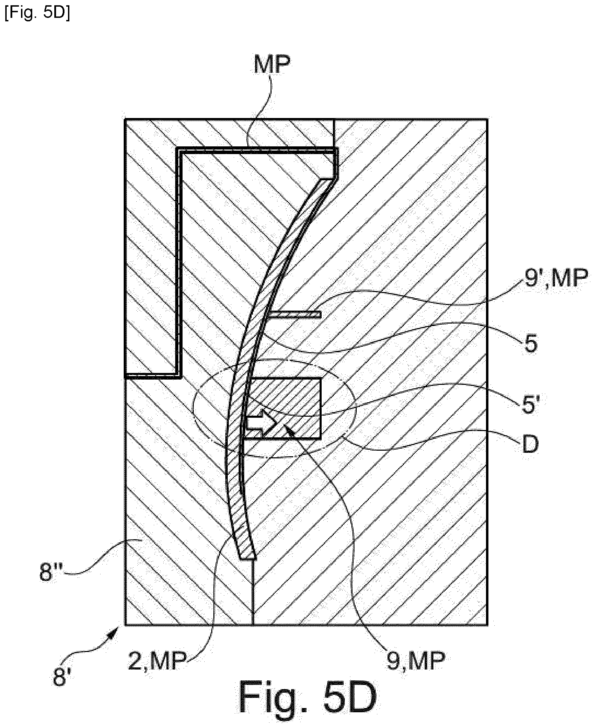

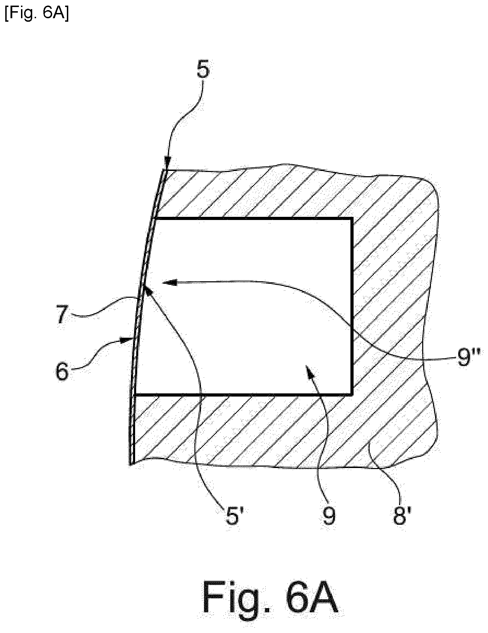

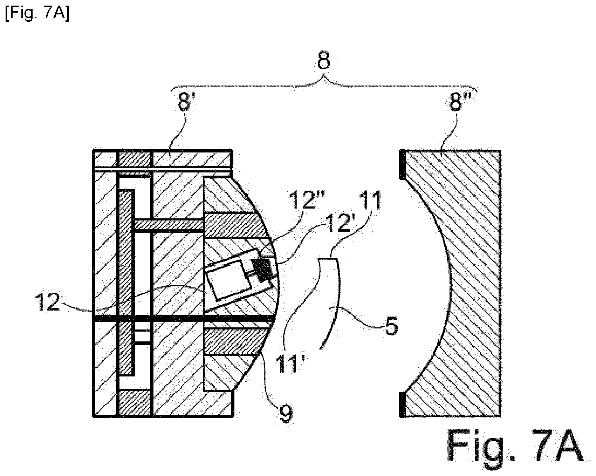

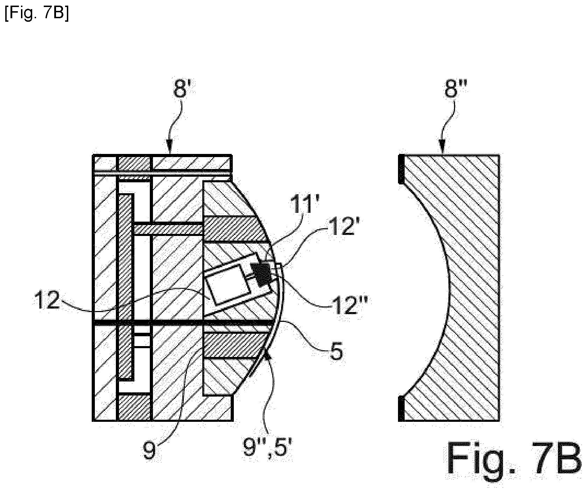

L'invention concerne également, comme le montrent à titre d'exemples les figures 5, 6 et 7, un procédé de fabrication d'une pièce (1) de garniture pour véhicule, ayant une forme au moins partiellement tridimensionnelle, notamment une pièce (1) telle que décrite ci-dessus.

Une telle pièce (1) comprend au moins une couche (2) en matériau plastique (MP), formant le cas échéant substrat, et présentant une face avant ou apparente (3) et une face arrière (3'), ladite pièce (1) comportant également des formations ou structures saillantes (4, 4') au niveau de sa face arrière (3'), correspondant avec celle de la couche (2), et au moins un élément fonctionnel surfacique (5) de faible épaisseur et comprenant un arrangement (6) de fil(s) ou d'élément(s) allongé(s) ou linéaires analogues (6'), conducteur(s) ou résistif(s) , solidaire d'une structure support (7) à extension surfacique.

Ce procédé est caractérisé en ce qu'il consiste à fournir au moins un élément fonctionnel surfacique (5) préfabriqué avec sa structure support à extension surfacique qui se présente sous forme de couche support (7) poreuse ou pourvue d'interstices, à disposer cet ou chaque élément fonctionnel surfacique (5) dans un moule à injection (8) à deux parties complémentaires (8' et 8") en le(s) disposant sur la partie de moule (8') qui formera la face arrière (3') de la couche (2) et qui comporte des réservations ou cavités (9, 9') pour le moulage des formations ou structures saillantes (4, 4'), à fermer le moule (8) de manière à former une chambre d'injection (10), à injecter le matériau plastique (MP) chaud à l'état fluide dans cette chambre (10), en remplissant également les réservations ou cavités (9, 9') par écoulement dudit matériau plastique (MP) injecté fluide à travers des zones (5') du ou de chaque élément fonctionnel surfacique (5) s'étendant par-dessus les ouvertures (9") vers la chambre d'injection (10) des réservations ou cavités (9, 9'), ce jusqu'à ce que ladite chambre d'injection (10) et lesdites réservations ou cavités (9, 9') soient pleines, et enfin à ouvrir le moule (8) et à en extraire, après durcissement suffisant de la matière plastique (MP), la pièce (1) comprenant la couche (2), les formations ou structures (4, 4') formées matériellement d'un seul tenant avec cette couche (2) et ledit au moins un élément fonctionnel surfacique (5) solidarisé avec elle, au moins le(s) fil(s) ou éléments analogues conducteur(s) ou résistif(s) (6') de ce dernier étant au moins partiellement encapsulé(s) par ledit matériau plastique (MP) au moins au niveau des zones (5') de l'élément fonctionnel surfacique (5) concernée. Au moins la ou les zones (5') précitées de l'élément (5) sont ajourées en étant pourvues d'une pluralité de passages traversants du type pores ou interstices.

L'invention permet ainsi de produire une pièce (1) améliorée intégrant un ou plusieurs élément(s) fonctionnel(s) surfacique(s) (5), sans complexifier, ni même modifier sensiblement (une seule opération en plus, la mise ne place de l'éléments 5), le procédé de fabrication, ni modifier le moule.

On peut noter que l'injection de matière plastique (MP) se fait depuis l'avant (par rapport à la pièce 1) et que la face arrière (3) n'est formée qu'après traversée de l'élément fonctionnel (5) là où il est présent.

Conformément avec une disposition avantageuse de l'invention, le positionnement de l'élément fonctionnel surfacique (5) dans le moule et l'injection de matière plastique (MP) sont réalisés de telle manière que, sur la pièce (1) résultante, ledit élément fonctionnel surfacique (5), ou au moins soit l'arrangement (6) de fils (6'), soit la structure support (7), est perceptible au niveau de la face arrière (3'), sur une partie ou toute son extension, visuellement ou par palpage. Plus précisément, l'intégration (partielle ou totale) de l'élément fonctionnel (5) dans la couche (2) peut se présenter comme illustré sur l'une des figure 8A à 8C.

En accord avec un mode de réalisation de l'invention, le procédé peut consister à fournir au moins un élément fonctionnel surfacique (5) dont l'arrangement (6) de fil(s) conducteur(s) (6') est solidaire d'une face de la couche support (7) ajourée associée et ledit au moins un élément fonctionnel surfacique (5) considéré peut être disposé sur la partie de moule (8') concernée, formant avantageusement poinçon, de telle manière qu'il repose sur cette partie de moule (8') par sa couche support (7) ajourée, l'ensemble de l'arrangement (6) de fil(s) conducteur(s) (6') étant ainsi encapsulé sensiblement en totalité par le matériau plastique (MP) et noyé dans ce dernier lorsque la chambre d'injection (10) et lesdites réservations ou cavités (9, 9') sont pleines. L'intégration de l'arrangement (6) au moins dans la couche (2) assure une isolation supplémentaire, une bonne cohésion de l'élément (5) et limite le risque de dégradation par arrachement ou frottements.

En accord avec un autre mode de réalisation de l'invention, le procédé peut consister à fournir au moins un élément fonctionnel surfacique (5) dont l'arrangement (6) de fil(s) conducteur(s) (6') est solidaire d'une face de la couche support (7) ajourée associée et ledit au moins un élément fonctionnel surfacique (5) considéré peut être disposé sur la partie de moule (8') concernée, formant avantageusement poinçon, de telle manière qu'il repose sur cette partie de moule (8') par l'arrangement (6) de fils (6'), la couche support (7) ajourée étant encapsulée en totalité par le matériau plastique (MP) et noyée dans l'épaisseur ce dernier lorsque la chambre d'injection (10) et lesdites réservations ou cavités (9, 9') sont pleines, les fils (6') de l'arrangement (6) étant quant à eux enrobés totalement ou partiellement, avec éventuellement une partie de l'épaisseur desdits fils (6') apparents au niveau de la face arrière (3'), dans la pièce finale.

Afin d'aboutir à un corps de pièce (1) monobloc et incorporant dans sa structure au moins un élément (5), il est prévu, selon un mode de réalisation de l'invention, que ce dernier soit disposé sur la partie de moule (8') concernée de telle manière que, lorsque la chambre d'injection (10) et lesdites réservations ou cavités (9, 9') sont pleines, cet élément fonctionnel surfacique (5) est entièrement noyé dans le matériau plastique (MP) formant la couche (2) et que ladite au moins une formation ou structure saillante (4, 4') soit d'un seul tenant avec ladite couche (2) par continuité de matière à travers ledit au moins un élément fonctionnel surfacique (5). L'absence de rupture de flux de matériau plastique et de ligne de re-soudure fournit une résistance à l'arrachement plus importante pour les formations et structures (4, 4') et une bonne cohésion de l'élément (5) dans la couche (2) qui l'intègre.

En accord avec une première variante de réalisation, la couche support (7) consiste en une grille ou un textile tissé ou non-tissé, avec une ouverture de mailles ou une porosité adaptée au passage du matériau plastique (MP) injecté à l'état fluide et composé(e) de fibres ou de filaments dont le matériau constitutif, naturel ou plastique, garde sa cohérence structurelle et est résistant aux températures et à la pression du matériau plastique chaud (MP) injecté, ladite couche support (7) étant avantageusement positionnée sur la partie de moule (8') concernée de telle manière qu'elle soit sensiblement totalement intégrée dans le matériau plastique (MP) au niveau de la face arrière (3') de la couche (2).

En accord avec une deuxième variante de réalisation, la couche support (7) consiste en une grille ou un textile tissé ou non-tissé, composé(e) de fibres ou de filaments dont le matériau constitutif est chimiquement compatible et adhérent avec le matériau plastique (MP) formant la couche (2), ces fibres ou filaments présentant éventuellement une constitution autorisant une pénétration au moins partielle dudit matériau plastique (MP) à l'état fluide chaud dans leur structure.

En accord avec une troisième variante de réalisation, la couche support (7) consiste en une couche à structure continue, telle qu'une peau, une feuille ou un film, en un matériau naturel, synthétique ou métallique, ladite couche étant pourvue de perforations réparties ou de pores pour le passage du matériau plastique (MP) injecté à l'état fluide chaud.

Dans les trois variantes évoquées ci-dessus, l'ensemble formé par la couche support (7) et l'arrangement (6) de fil(s) ou ligne(s) à propriété conductrices ou résistives (6') et correspondant à une élément fonctionnel surfacique (5), par exemple du type « mat chauffant », comprend au moins un composant de nature conductrice ou résistive qui est appliqué sur une couche support permettant sa transformation, en particulier sa surinjection. Cette couche support, par exemple un film, un tissu, une tulle ou un intissé, peut avantageusement, lors de la surinjection, permettre une accroche avec la matière plastique injectée, et peut en outre, si besoin, constituer une protection thermique. Le choix du matériau formant la couche support peut notamment être déterminé en fonction de la géométrie et de l'épaisseur de la pièce finale, mais également de la nature du matériau plastique (MP) injecté. Sa porosité de base peut en outre être, le cas échéant, modifiée localement par entaillage ou ajourage pour favoriser un passage adéquat du matériau injecté.

En vue d'aboutir à une pièce (1) comprenant des moyens de branchement électrique spécifiques au niveau de sa face arrière (3'), le procédé selon l'invention peut consister à fournir au moins un élément fonctionnel surfacique (5) présentant une partie (11) de connexion ou de raccordement en vue de son alimentation électrique et/ou de la transmission de signaux électriques, ce sous la forme d'une extension allongée de l'élément (5) concerné et à disposer cet élément fonctionnel surfacique (5) sur la partie de moule (8') concernée de telle manière qu'une portion (11') extrémale de cette extension allongée (11) se trouve logée dans une cavité étanche (12) de ladite partie de moule (8'), au moins durant la phase d'injection et éventuellement durant la phase de durcissement de la matière plastique (MP), l'extension allongée (11) étant positionnée dans le moule (8) de telle manière qu'elle se retrouve, après la phase de durcissement, encastrée et encapsulée dans le matériau plastique (MP) de la couche (2) qu'elle traverse, à l'exception de sa portion extrémale (11') qui s'étend au-delà de la face arrière (3') de la couche (2).On obtient ainsi un raccordement électrique facilité par l'arrière de la pièce.

Plus précisément, il peut être prévu de fournir au moins un élément fonctionnel surfacique (5) dont l'extension allongée (11) est formée d'une bande (13) du matériau formant la couche support (7), préférentiellement prolongeant d'un seul tenant cette dernière, et portant avec solidarisation des lignes de transmission et/ou d'alimentation (6") reliées à l'arrangement (6) de fil(s) conducteur(s) (6'). On aboutit ainsi à un élément (5) robuste et homogène structurellement, plus facile à réaliser et dont le moyen de raccordement est d'un seul tenant avec l'élément luimême. En vue de renforcer structurellement la majeure partie, voire la totalité de la couche (2), il peut être prévu que la couche support (7) s'étende au-delà du contour périphérique d'une zone fonctionnelle (14) de l'élément fonctionnel surfacique (5) considéré, laquelle est définie par l'arrangement (6) de fil(s) conducteur(s) ou résistif(s) (6'), par exemple sur une majeure partie de la face arrière (3') de la couche (2), voire sur la totalité de cette dernière, en formant avantageusement une armature de renfort intégrée à cette couche (2).

En relation avec le premier mode de réalisation de la pièce (1) mentionnée précédemment, le procédé de fabrication peut aboutir directement à une pièce finie après démoulage, la face apparente ou avant de la couche (2) formant la couche apparente (3) de la pièce (1). Cette face avant (3) peut être lisse ou le cas échéant comporter une surface texturée ou structurée (voir nervure sur les figures 8.

En relation avec le second mode de réalisation de la pièce (1) mentionnée précédemment, le procédé de fabrication peut en outre consister à rapporter, soit après durcissement dans le moule (8), soit ultérieurement après extraction dudit moule (8), au moins une couche additionnelle, à savoir au moins une couche d'aspect ou décorative, sur la face apparente (3) de la couche (2) formant ainsi substrat, de manière à recouvrir partiellement ou totalement cette face (3), cette au moins une couche additionnelle constituant au moins une partie de la face apparente de ladite pièce (1). Ce mode de réalisation autorise une flexibilité supplémentaire dans les possibilités de choix d'aspect, de toucher et de confort, indépendamment de la réalisation de la couche (2).

Enfin l'invention vise également, comme illustré à titre d'exemples par les figures 5 à 7, un moule pour la réalisation du procédé de fabrication précité, comprenant deux parties constitutives (8', 8") mobiles relativement l'une par rapport à l'autre, à savoir, un poinçon (8') pourvu des réservations ou cavités (9, 9') pour le moulage de formations ou structures saillantes (4, 4') au niveau de la face arrière (3') de la couche (2), et donc de la pièce (1), d'une part, et une matrice (8") définissant l'état de surface de la face apparente (3) de la couche (2), et le cas échéant de la pièce (1), d'autre part, ces deux parties constitutives (8', 8") délimitant par coopération mutuelle, à l'état fermé du moule (8), une chambre d'injection (10) intégrant les réservations ou cavités (9, 9').

Ce moule (8) est caractérisé en ce que le poinçon (11') comporte au moins une zone pour la réception indexée d'au moins un élément fonctionnel surfacique (5) de faible épaisseur et comprenant un arrangement de fil(s) conducteur(s) (6) solidaire d'une structure support (7) à extension surfacique sous forme de couche ajourée. Un positionnement précis de l'élément fonctionnel (5) dans le moule et donc dans la couche (2) peut être facilement atteint.

Selon une caractéristique constructive avantageuse, le moule (8) peut comporter Cette disposition permet également au moins une cavité (12) pour la réception d'une extension allongée (11) formant partie de connexion dudit au moins un élément fonctionnel surfacique (5) correspondant placé sur ledit poinçon (11'), ladite cavité (12) comportant une ouverture (12') vers la chambre d'injection (10), et, d'autre part, un moyen (12") de fermeture étanche de cette cavité (12), plus précisément de son ouverture (12'), permettant de pincer ladite extension allongée (11) et d'en isoler une partie extrémale (11') par rapport à la chambre d'injection (10). Cette disposition permet d'obtenir une zone de raccordement libre de la couche (2) et facilement accessible.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Pièce (1) de garniture ou d'équipement pour véhicule, ayant préférentiellement au moins partiellement une forme tridimensionnelle, comprenant au moins une couche (2) en matériau plastique (MP), formant le cas échéant substrat, et présentant une face avant ou apparente (3) et une face opposée arrière (3'), ladite pièce (1) comportant également, d'une part, des formations ou structures saillantes (4, 4') au niveau de sa face arrière (3'), correspondant avec celle de la couche (2), et, d'autre part, au moins un élément fonctionnel surfacique (5) de faible épaisseur et comprenant un arrangement (6) de fil(s) ou d'élément(s) allongé(s) ou linéaire(s) analogues (6'), conducteur(s) ou résistif(s), solidaire d'une structure support (7) poreuse ou pourvue d'interstices et à extension surfacique, pièce (1) **caractérisée en ce qu'**au moins l'arrangement (6) de fil(s) ou analogues (6') du ou de chaque élément fonctionnel surfacique (5), et préférentiellement également la structure support (7) à extension surfacique respectivement associée sous forme de couche poreuse ou pourvue d'interstices, est (sont) au moins partiellement intégré(s) dans et encapsulé(s) par le matériau plastique (MP) formant cette couche (2), ce au niveau de la face arrière (3') de cette couche (2), et **en ce qu'**au moins une formation ou structure saillante (4, 4') est reliée matériellement avec ladite couche (2) au niveau dudit au moins un élément fonctionnel surfacique (5) et à travers ce dernier, cet élément fonctionnel surfacique (5), ou au moins soit l'arrangement (6) de fils (6'), soit la structure support (7), étant avantageusement perceptible au niveau de la face arrière (3'), sur une partie ou toute son extension, visuellement ou par palpage.

2. Pièce (1) selon la revendication 1, **caractérisée en ce que** le ou chaque élément fonctionnel surfacique (5) est entièrement intégré dans le matériau plastique (MP) formant cette couche (2), à proximité et sous la face arrière (3'), et **en ce que** ladite au moins une formation ou structure saillante (4, 4'), s'étendant depuis ladite face arrière (3'), est constituée d'un seul tenant avec ladite couche (2) par continuité de matière à travers ledit au moins un élément fonctionnel surfacique (5) pourvues de pores, d'interstices ou de passages similaires répartis sur sa surface.

3. Pièce (1) selon la revendication 2, **caractérisée en ce que** l'épaisseur de matière plastique (MP) recouvrant l'élément fonctionnel surfacique (5) et formant la surface de la face arrière (3') est telle que la présence des fils (6') de l'arrangement ou de la structure support surfacique (7) puisse être détecter visuellement ou par palpage ou au toucher.

4. Pièce (1) selon la revendication 1, **caractérisée en ce que** le ou chaque élément fonctionnel surfacique (5) est seulement partiellement intégré en profondeur dans le matériau plastique (MP) formant cette couche (2), une partie de l'épaisseur des fils (6') de l'arrangement (6) ou une partie de l'épaisseur de la structure support (7) n'étant pas recouverte ou enrobée par ledit matériau plastique (MP) et étant apparente au niveau de la face arrière (3'), le cas échéant au moins sur une partie de l'extension surfacique dudit arrangement ou de ladite structure support au niveau de ladite face arrière (3').

5. Pièce (1) selon l'une quelconque des revendications 1 à 4, **caractérisée en ce que** les fils (6') de l'arrangement (6) ou la structure support (7) présente une couleur différente de celle de la matière plastique (MP), notamment par exemple une couleur blanche.

6. Pièce (1) selon l'une quelconque des revendications 1 à 5, **caractérisée en ce que** ledit au moins un élément fonctionnel surfacique (5) comporte une partie (11) de connexion ou de raccordement en vue de son alimentation électrique et/ou de la transmission de signaux électriques, ce sous la forme d'une extension allongée de l'élément (5) concerné seulement partiellement, voire non intégrée dans la couche (2) et s'étendant librement depuis la face arrière (3') de cette dernière.

7. Pièce (1) selon l'une quelconque des revendications 1 à 6, **caractérisée en ce que** la face avant ou apparente (3) de la couche (2) constitue également la face apparente (3) de ladite pièce (1), cette dernière consistant en une pièce monobloc et venue finie de moulage, avec au moins une formation ou structure saillante (4, 4') et au moins un élément fonctionnel surfacique (5) intégré.

8. Pièce (1) selon l'une quelconque des revendications 1 à 7, **caractérisée en ce que** la face avant (3) de la couche (2) est recouverte, partiellement ou totalement, d'au moins une couche additionnelle, à savoir au moins une couche d'aspect ou un revêtement décoratif, qui constitue la face apparente de ladite pièce (1), ladite couche (2) consistant en une pièce venue finie de moulage, avec au moins une formation ou structure saillante (4, 4') d'un seul tenant et au moins un élément fonctionnel surfacique (5) intégré.

9. Procédé de fabrication d'une pièce (1) de garniture ou d'équipement pour véhicule, ayant une forme au moins partiellement tridimensionnelle, notamment une pièce (1) selon l'une quelconque des revendications 1 à 8, cette pièce (1) comprenant au moins une couche (2) en matériau plastique (MP), formant le cas échéant substrat, et présentant une face avant ou apparente (3) et une face arrière (3'), ladite pièce (1) comportant également des formations ou structures saillantes (4, 4') au niveau de sa face arrière (3'), correspondant avec celle de la couche (2), et au moins un élément fonctionnel surfacique (5) de faible épaisseur et comprenant un arrangement (6) de fil(s) ou d'élément(s) allongé(s) ou linéaire(s) analogues (6'), conducteur(s) ou résistif(s), solidaire d'une structure support (7) à extension surfacique,
procédé **caractérisé en ce qu'**il consiste à fournir au moins un élément fonctionnel surfacique (5) préfabriqué avec sa structure support à extension surfacique qui se présente sous forme de couche support (7) poreuse ou pourvue d'interstices, à disposer cet ou chaque élément fonctionnel surfacique (5) dans un moule à injection (8) à deux parties complémentaires (8' et 8") en le(s) disposant sur la partie de moule (8') qui formera la face arrière (3') de la couche (2) et qui comporte des réservations ou cavités (9, 9') pour le moulage des formations ou structures saillantes (4, 4'), à fermer le moule (8) de manière à former une chambre d'injection (10), à injecter le matériau plastique (MP) chaud à l'état fluide dans cette chambre (10), en remplissant également les réservations ou cavités (9, 9') par écoulement dudit matériau plastique (MP) injecté fluide à travers des zones (5') du ou de chaque élément fonctionnel surfacique (5) s'étendant par-dessus les ouvertures (9") vers la chambre d'injection (10) des réservations ou cavités (9, 9'), ce jusqu'à ce que ladite chambre d'injection (10) et lesdites réservations ou cavités (9, 9') soient pleines, et enfin à ouvrir le moule (8) et à en extraire, après durcissement suffisant de la matière plastique (MP), la pièce (1) comprenant la couche (2), les formations ou structures (4, 4') formées matériellement d'un seul tenant avec cette couche (2) et ledit au moins un élément fonctionnel surfacique (5) solidarisé avec elle, au moins le(s) fil(s) ou éléments analogues conducteur(s) ou résistif(s) (6') de ce dernier étant au moins partiellement encapsulé(s) par ledit matériau plastique (MP) au moins au niveau des zones (5') de l'élément fonctionnel surfacique (5) concernée.

10. Procédé de fabrication selon la revendication 9, **caractérisé en ce que** le positionnement de l'élément fonctionnel surfacique (5) dans le moule et l'injection de matière plastique (MP) sont réalisés de telle manière que, sur la pièce (1) résultante, ledit élément fonctionnel surfacique (5), ou au moins soit l'arrangement (6) de fils (6'), soit la structure support (7), est perceptible au niveau de la face arrière (3'), sur une partie ou toute son extension, visuellement ou par palpage.

11. Procédé de fabrication selon la revendication 9 ou 10, **caractérisé en ce qu'**il consiste à fournir au moins un élément fonctionnel surfacique (5) dont l'arrangement (6) de fil(s) conducteur(s) (6') est solidaire d'une face de la couche support (7) ajourée associée et **en ce que** ledit au moins un élément fonctionnel surfacique (5) considéré est disposé sur la partie de moule (8') concernée, formant avantageusement poinçon, de telle manière qu'il repose sur cette partie de moule (8') par sa couche support (7) ajourée, l'ensemble de l'arrangement (6) de fil(s) conducteur(s) (6') étant ainsi encapsulé sensiblement en totalité par le matériau plastique (MP) et noyé dans ce dernier lorsque la chambre d'injection (10) et lesdites réservations ou cavités (9, 9') sont pleines.

12. Procédé de fabrication selon l'une quelconque des revendications 9 à 11, **caractérisé en ce qu'**il consiste à fournir au moins un élément fonctionnel surfacique (5) dont l'arrangement (6) de fil(s) conducteur(s) (6') est solidaire d'une face de la couche support (7) ajourée associée et **en ce que** ledit au moins un élément fonctionnel surfacique (5) considéré est disposé sur la partie de moule (8') concernée, formant avantageusement poinçon, de telle manière qu'il repose sur cette partie de moule (8') par l'arrangement (6) de fils (6'), la couche support (7) ajourée étant encapsulée en totalité par le matériau plastique (MP) et noyée dans l'épaisseur ce dernier lorsque la chambre d'injection (10) et lesdites réservations ou cavités (9, 9') sont pleines, les fils (6') de l'arrangement (6) étant quant à eux enrobés totalement ou partiellement, avec éventuellement une partie de l'épaisseur desdits fils (6') apparents au niveau de la face arrière (3'), dans la pièce finale.

13. Procédé de fabrication selon l'une quelconque des revendications 9 à 12, **caractérisé en ce que** la couche support (7) consiste en une grille ou un textile tissé ou non-tissé, avec une ouverture de mailles ou une porosité adaptée au passage du matériau plastique (MP) injecté à l'état fluide et composé(e) de fibres ou de filaments dont le matériau constitutif, naturel ou plastique, garde sa cohérence structurelle et est résistant aux températures et à la pression du matériau plastique chaud (MP) injecté, ladite couche support (7) étant avantageusement positionnée sur la partie de moule (8') concernée de telle manière qu'elle soit sensiblement totalement intégrée dans le matériau plastique (MP) au niveau de la face arrière (3') de la couche (2).

14. Procédé de fabrication selon l'une quelconque des revendications 9 à 13, **caractérisé en ce que** la couche support (7) consiste en une grille ou un textile tissé ou non-tissé, composé(e) de fibres ou de filaments dont le matériau constitutif est chimiquement compatible et adhérent avec le matériau plastique (MP) formant la couche (2), ces fibres ou filaments présentant éventuellement une constitution autorisant une pénétration au moins partielle dudit matériau plastique (MP) à l'état fluide chaud dans leur structure.

15. Procédé de fabrication selon l'une quelconque des revendications 9 à 14, **caractérisé en ce que** la couche support (7) consiste en une couche à structure continue, telle qu'une peau, une feuille ou un film, en un matériau naturel, synthétique ou métallique, ladite couche étant pourvue de perforations réparties ou de pores pour le passage du matériau plastique (MP) injecté à l'état fluide chaud.

16. Procédé de fabrication selon l'une quelconque des revendications 9 à 15, **caractérisé en ce qu'**il consiste à fournir au moins un élément fonctionnel surfacique (5) présentant une partie (11) de connexion ou de raccordement en vue de son alimentation électrique et/ou de la transmission de signaux électriques, ce sous la forme d'une extension allongée de l'élément (5) concerné et **en ce que** cet élément fonctionnel surfacique (5) est disposé sur la partie de moule (8') concernée de telle manière qu'une portion (11') extrémale de cette extension allongée (11) se trouve logée dans une cavité étanche (12) de ladite partie de moule (8'), au moins durant la phase d'injection et éventuellement durant la phase de durcissement de la matière plastique (MP), l'extension allongée (11) étant positionnée dans le moule (8) de telle manière qu'elle se retrouve, après la phase de durcissement, encastrée et encapsulée dans le matériau plastique (MP) de la couche (2) qu'elle traverse, à l'exception de sa portion extrémale (11') qui s'étend au-delà de la face arrière (3') de la couche (2).

17. Procédé de fabrication selon la revendication 16, **caractérisé en ce qu'**il consiste à fournir au moins un élément fonctionnel surfacique (5) dont l'extension allongée (11) est formée d'une bande (13) du matériau formant la couche support (7), préférentiellement prolongeant d'un seul tenant cette dernière, et portant avec solidarisation des lignes de transmission et/ou d'alimentation (6") reliées à l'arrangement (6) de fil(s) conducteur(s) (6').

18. Procédé de fabrication selon l'une quelconque des revendications 9 à 17, **caractérisé en ce que** la couche support (7) s'étend au-delà du contour périphérique d'une zone fonctionnelle (14) de l'élément fonctionnel surfacique (5) considéré, laquelle est définie par l'arrangement (6) de fil(s) conducteur(s) ou résistif(s) (6'), par exemple sur une majeure partie de la face arrière (3') de la couche (2), voire sur la totalité de cette dernière, en formant avantageusement une armature de renfort intégrée à cette couche (2).

19. Procédé de fabrication selon l'une quelconque des revendications 9 à 18, **caractérisé en ce qu'**il consiste à rapporter, soit après durcissement dans le moule (8), soit ultérieurement après extraction dudit moule (8), au moins une couche additionnelle, à savoir au moins une couche d'aspect ou décorative, sur la face apparente (3) de la couche (2) formant ainsi substrat, de manière à recouvrir partiellement ou totalement cette face (3), cette au moins une couche additionnelle constituant au moins une partie de la face apparente de ladite pièce (1).

20. Moule (8) pour la réalisation du procédé de fabrication selon l'une quelconque des revendications 9 à 19, comprenant deux parties constitutives (8', 8") mobiles relativement l'une par rapport à l'autre, à savoir, un poinçon (8') pourvu des réservations ou cavités (9, 9') pour le moulage de formations ou structures saillantes (4, 4') au niveau de la face arrière (3') de la couche (2), et donc de la pièce (1), d'une part, et une matrice (8") définissant l'état de surface de la face apparente (3) de la couche (2), et le cas échéant de la pièce (1), d'autre part, ces deux parties constitutives (8', 8") délimitant par coopération mutuelle, à l'état fermé du moule (8), une chambre d'injection (10) intégrant les réservations ou cavités (9, 9'),
moule (8) **caractérisé en ce que** le poinçon (11') comporte au moins une zone pour la réception indexée d'au moins un élément fonctionnel surfacique (5) de faible épaisseur et comprenant un arrangement de fil(s) conducteur(s) (6) solidaire d'une structure support (7) à extension surfacique sous forme de couche ajourée.

21. Moule selon la revendication 20, **caractérisé en ce qu'**il comporte également au moins une cavité (12) pour la réception d'une extension allongée (11) formant partie de connexion dudit au moins un élément fonctionnel surfacique (5) correspondant placé sur ledit poinçon (11'), ladite cavité (12) comportant une ouverture (12') vers la chambre d'injection (10), et, d'autre part, un moyen (12") de fermeture étanche de cette cavité (12), plus précisément de son ouverture (12'), permettant de pincer ladite extension allongée (11) et d'en isoler une partie extrémale (11') par rapport à la chambre d'injection (10).
